# FASCICULE DE BREVET EUROPEEN

(11) **EP 0 593 378 B1**
(45) Date de publication et mention de la délivrance du brevet: **02.05.1997**
(21) Numéro de dépôt: 93440084.7
(22) Date de dépôt: 12.10.1993
(51) Int. Cl.: A01D 78/10

(54) **Machine de fenaison pour l'andainage de fourrage**
Heuwerbungsmaschine zum Schwaden von Halmgut
Haymaking machine for the windrowing of forage

(30) Priorité: 16.10.1992 FR 9212630
(43) Date de publication de la demande: 20.04.1994
(73) Titulaire: KUHN S.A., F-67700 Saverne (FR)
(72) Inventeur: Aron, Jérôme, F-67330 Dossenheim Sur Zinsel (FR); Helfer, Marc, F-67450 Lampertheim (FR)
(74) Mandataire: Andres, Jean-Claude

(56) Documents cités:
- EP-A- 0 300 937
- EP-A- 0 443 338
- EP-A- 0 454 602
- DE-U- 7 835 320
- DE-U- 8 913 517
- FR-A- 2 254 932
- FR-A- 2 443 794
- GB-A- 2 057 239
- US-A- 3 814 191
- US-A- 4 232 747

## Description

La présente invention se rapporte à une machine de fenaison pour l'andainage de fourrage ayant deux roues râteleuses qui sont entraînées en rotation durant le travail autour d'axes sensiblement verticaux, lesquelles roues râteleuses sont reliées entre elles au moyen d'un support transversal réalisé en deux parties articulées entre elles, l'une de ces parties étant fixe et l'autre pouvant être repliée autour de cette articulation jusque au-dessus de la partie fixe et de la roue râteleuse correspondante pour le transport.

Sur une machine de ce genre, connue dans le modèle d'utilité DE-78 35 320, l'articulation entre les deux parties du support transversal se compose d'une pièce intermédiaire et d'un seul axe de pivotement sensiblement horizontal. Le déplacement de la partie repliable autour de cet axe doit être effectué manuellement. Ceci est une opération pénible, voire dangereuse. De plus, l'arbre de transmission qui assure l'entraînement de la roue râteleuse repliable doit être désaccouplé de cette dernière avant son déplacement.

La transposition de la position de travail dans la position de transport et vice versa nécessite de nombreuses interventions directes de la part de l'opérateur. En sus, celles-ci sont fastidieuses et occasionnent d'importantes pertes de temps.

La demande de brevet EP-454 602 se rapporte à une faneuse avec un châssis qui se compose d'un tronçon central et de trois tronçons latéraux de chaque côté dudit tronçon central. Ces tronçons sont articulés entre eux et portent des rotors entraînés en rotation durant le travail. Des vérins hydrauliques relient chaque troisième tronçon latéral au tronçon central.

Au travail, les différents rotors peuvent suivre les dénivellations du sol en pivotant avec les tronçons autour des axes d'articulation de ces derniers. Dans la position de transport, les tronçons latéraux sont repliés au moyen des vérins hydrauliques de telle sorte que les premiers et seconds tronçons soient dirigés vers le haut et que les troisièmes tronçons soient dirigés vers le bas. Les tronçons latéraux sont bloqués dans cette position de transport au moyen de dispositifs de verrouillage disposés sur les vérins hydrauliques.

La présente invention a notamment pour but de remédier aux inconvénients précités des machines connues.
A cet effet, d'importantes caractéristiques de l'invention consistent en ce qu'un vérin hydraulique est relié par l'une de ses extrémités à la partie fixe dudit support et par son autre extrémité à la partie repliable, en vue d'assurer le déplacement de cette dernière autour de l'axe de pivotement, que ce vérin hydraulique est guidé de telle sorte que dans chaque position de ladite partie repliable, il se situe au dessus d'un plan horizontal passant par l'axe géométrique de l'axe de pivotement et que la machine comporte un dispositif de verrouillage bloquant la partie repliable par rapport à la première partie fixe dans la position de travail.

Cet agencement permet d'éviter le déplacement manuel de la partie repliable du support. L'opérateur n'a plus à se déplacer, ni à produire d'importants efforts physiques pour cette opération. On obtient ainsi un appréciable gain de temps et de confort.

Par ailleurs, le vérin hydraulique agit avec un important bras de levier sur la partie repliable du support, à la fois lorsqu'il tire ou lorsqu'il pousse celle-ci.

De plus, dans la position de travail, la machine est très stable.

D'autres caractéristiques de l'invention consistent en ce que la machine comporte un verrou pour lier entre elles les deux parties du support transversal durant le travail. Ce verrou est muni d'une patte de manoeuvre qui est en contact avec un tourillon solidaire du vérin hydraulique. Ce dernier assure ainsi automatiquement le déverrouillage de la partie repliable du support, lorsqu'il est actionné en vue de la mise en position de transport.

Une autre caractéristique de l'invention consiste en ce que dans chaque partie du support transversal est logé un arbre pour l'entraînement de la roue râteleuse correspondante et que ces deux arbres sont reliés entre eux au moyen d'un dispositif d'accouplement à doigts. Cet agencement permet un déplacement de près de 180° de la partie repliable du support, tout en maintenant la liaison entre les deux arbres d'entraînement. De ce fait, il n'est pas nécessaire de désaccoupler ces arbres pour la mise en position de transport de la machine.

D'autres caractéristiques et avantages de l'invention ressortiront des revendications et de la description ci-après d'un exemple de réalisation non limitatif de l'invention, avec référence aux dessins annexés dans lesquels :
- La figure 1 représente une vue de dessus d'une machine selon l'invention en position de travail ;
- La figure 2 représente une vue arrière de la machine de la figure 1 ;
- La figure 3 représente une vue de détail du support des roues râteleuses en position de travail ;
- La figure 4 représente une vue de dessus du détail représenté sur la figure 3 ;
- La figure 5 représente une vue arrière de la machine en position de transport ;
- La figure 6 représente une vue de détail du support des roues râteleuses en position de transport.

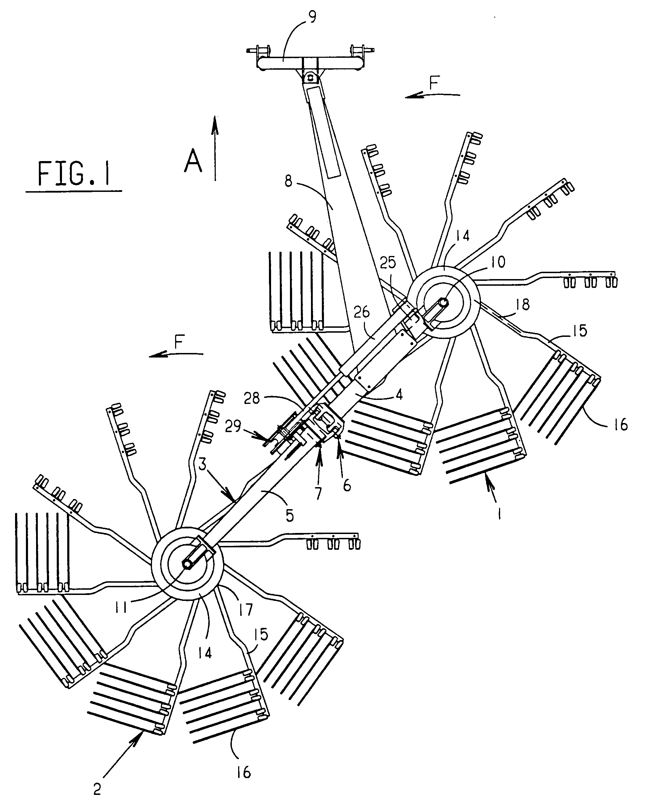

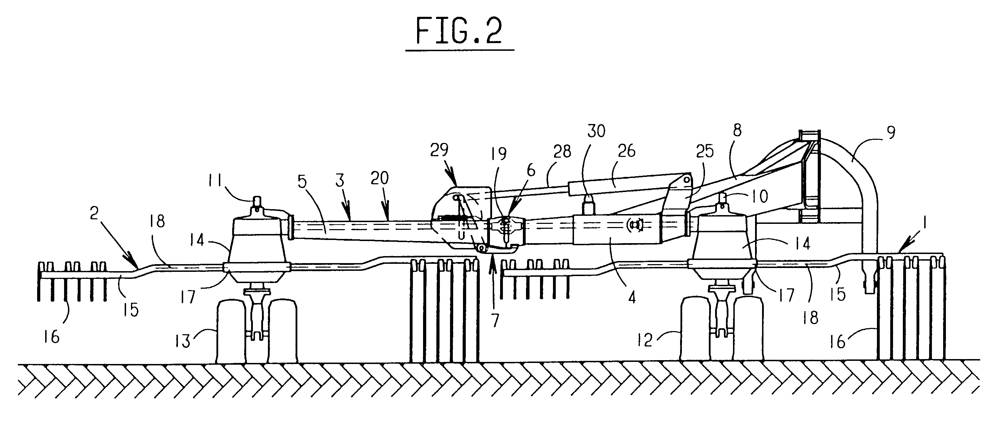

Tel que cela ressort des figures 1, 2 et 5, l'andaineur selon l'invention comporte deux roues râteleuses (1 et 2). Celles-ci sont fixées aux extrémités d'un support transversal (3). Ce support est réalisé en deux parties (4 et 5) en forme de tube. Ces deux parties (4 et 5) sont reliées entre elles au moyen d'une articulation (6). Elles peuvent être bloquées l'une par rapport à l'autre au moyen d'un dispositif de verrouillage (7). La première partie (4) est fixée à l'extrémité arrière d'une poutre (8) qui s'étend vers l'avant. Cette poutre porte à son autre extrémité un dispositif d'accouplement trois points (9) qui permet l'accrochage de la machine à un tracteur non représenté.

Les roues râteleuses (1 et 2) sont montées de manière à pouvoir tourner sur des axes (10 et 11) sensiblement verticaux qui sont liés au support (3). Ces axes (10, 11) portent à leur extrémité qui est dirigée vers le bas, une paire de roues d'appui (12, 13). Chaque roue râteleuse (1, 2) possède un boîtier central (14) qui est guidé en rotation sur l'axe (10, 11) correspondant. Ce boîtier (14) porte plusieurs bras (15) qui s'étendent pratiquement dans un plan horizontal. Ceux-ci sont munis à leurs extrémités les plus éloignées du boîtier (14) de fourches de râtelage (16). Ces bras (15) sont montés dans des paliers (17) dudit boîtier (14) de manière à pouvoir pivoter autour de leurs axes géométriques longitudinaux (18). Dans le boîtier (14) même se situe une came de commande qui est fixée sur l'axe (10, 11). Chaque bras porte-fourches (15) possède à son extrémité située à l'intérieur du boîtier (14) un galet qui coopère avec ladite came de commande.

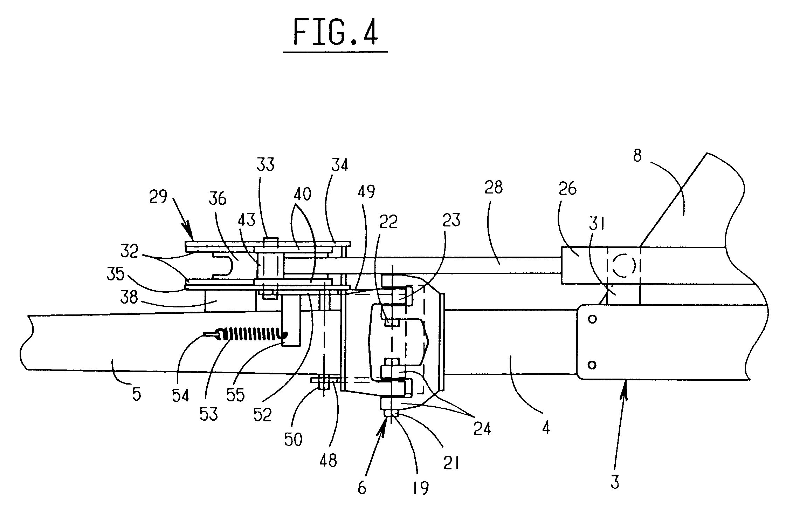

L'articulation (6) entre les deux parties (4 et 5) comporte un seul axe de pivotement (19) sensiblement horizontal et sensiblement perpendiculaire à la direction longitudinale desdites parties (4 et 5). Cet axe (19) se situe à la face supérieure (20) des parties (4 et 5). Il est réalisé en deux sections (21 et 22) qui sont alignées l'une sur l'autre et sont logées dans des oreilles (23 et 24) prévues sur les parties (4 et 5) (voir figure 4).

La première partie fixe (4) du support (3) comporte un bras coudé (25) qui est dirigé obliquement vers l'avant et vers le haut. Sur ce bras (25) est articulé un vérin hydraulique (26) au moyen d'un axe (27). Vu de dessus, ce vérin (26) se situe devant le support transversal (3). Il est raccordé au moyen de tuyaux non représentés au circuit hydraulique du tracteur à partir duquel il est commandé. Ce vérin (26) comporte une tige (28) qui est reliée à la partie repliable (5) du support transversal (3), en vue d'assurer le déplacement de celle-ci autour de l'axe d'articulation (19). Ledit vérin (26) est guidé de telle sorte que dans chaque position qu'occupe la partie repliable (5), durant ses déplacements autour de l'axe (19), il se situe au-dessus d'un plan horizontal (P) passant par l'axe géométrique dudit axe d'articulation (19). A cet effet, la tige (28) du vérin (26) coopère avec un dispositif de guidage (29) qui le maintient au-dessus dudit plan (P). En sus, la première partie (4) du support (3) comporte une butée (30) sur laquelle repose le corps du vérin hydraulique (26), lorsque la partie repliable (5) est dans la position de travail et lorsqu'elle est dans la position de transport. Cette butée (30) est constituée par un plot en caoutchouc fixé sur un bras (31) qui est solidaire de la première partie (4) du support transversal (3).

Le dispositif de guidage (29) se compose d'une part d'un arrêt (32) et d'un tourillon (33), qui sont solidaires de la tige (28) du vérin (26) et, d'autre part, de deux plaques parallèles (34 et 35) qui sont solidaires de la partie repliable (5). Ces deux plaques (34 et 35) sont sensiblement verticales. Elles sont reliées entre elles par une entretoise (36) située près de leurs bords inférieurs (37) et sont liées à la partie repliable (5) au moyen d'une patte (38) (voir figure 4). L'arrêt (32) et l'extrémité de la tige (28) du vérin (26) se situent entre les deux plaques (34 et 35). Celles-ci comportent près de leurs bords (39) dirigés vers le haut et de leurs bords (37) dirigés vers le bas dans la position de travail, des butées (40, 41) qui limitent les déplacements de l'arrêt (32). La butée (40) est en deux parties afin de permettre le passage de la tige (28) du vérin (26). Chaque plaque (34 et 35) comporte en sus un orifice (42) de forme allongée. Le tourillon (33) s'étend à travers l'orifice (42) de chaque plaque (34 et 35).

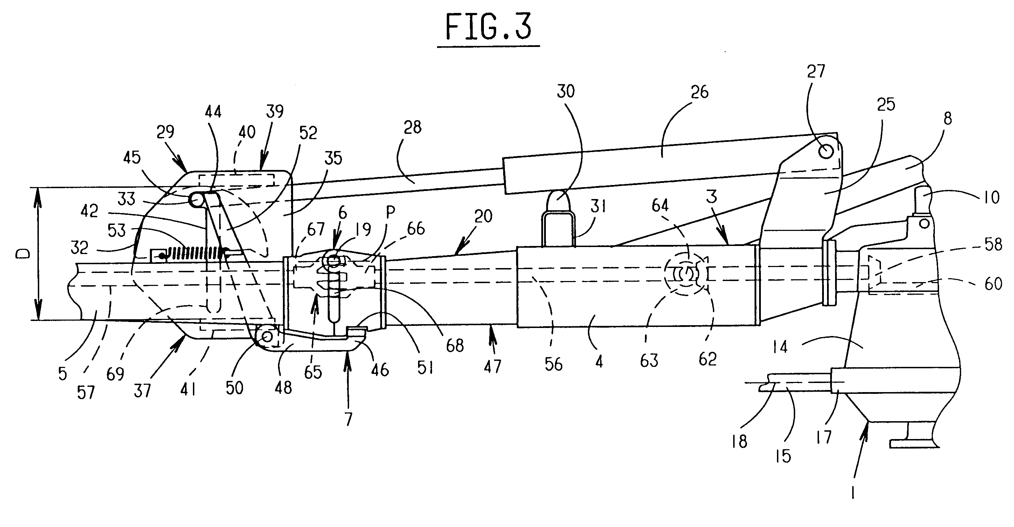

L'arrêt (32) est réalisé en deux parties identiques reliées par une entretoise (43). Celle-ci est par ailleurs solidaire de la tige (28) du vérin (26) et du tourillon (33). Ledit arrêt (32) présente sensiblement la forme d'un demi-cercle. Le diamètre de ce cercle est égal à la distance (D) entre les deux butées (40 et 41). Le tourillon (33) se situe près du bord de l'arrêt (32) (voir figures 3 et 4).

L'orifice (42) de chaque plaque (34, 35) s'étend sur pratiquement toute la distance entre les deux butées (40 et 41). Il est sensiblement vertical lorsque la partie repliable (5) du support (3) est dépliée dans la position de travail. De plus, il comporte près de son extrémité (44) qui est dirigée vers le haut dans la position de travail, une encoche latérale (45) qui est orientée vers la roue râteleuse (2) de la partie repliable (5). La taille de cette encoche (45) est telle que le tourillon (33) puisse s'y loger.

Selon une variante de réalisation non représentée, le dispositif de guidage (29) ne comporte qu'une seule plaque (35). Dans ce cas, le tourillon (33) et l'arrêt (32) coopèrent comme décrit précédemment avec cette plaque unique.

Le dispositif de verrouillage (7) comporte un verrou (46) qui se situe sur le côté (47) du support transversal (3) qui est dirigé vers le bas. Ce verrou (46) a essentiellement la forme d'un U. Les deux branches parallèles (48 et 49) sont articulées au moyen d'un axe (50) sur la partie repliable (5). La première partie (4) comporte un logement (51) dans lequel peut s'engager le verrou (46) en vue de lier la partie repliable (5) à cette première partie (4) dans la position de travail. Le verrou (46) comporte en sus une patte de manoeuvre (52) qui est actionnée par le tourillon (33). Elle est parallèle à la plaque (35) et s'étend obliquement vers le haut face à l'orifice (42), jusque dans le voisinage de l'encoche latérale (45). Lorsque le tourillon (33) se situe dans ladite encoche (45) il n'est pas ou tout juste en contact avec la patte de manoeuvre (52). Un ressort de traction (53) est accroché à une plaquette (54) solidaire de la partie repliable (5) et à une deuxième plaquette (55) qui est solidaire de la patte de manoeuvre (52). Ce ressort (53) tire sur la patte (52) et sollicite normalement le verrou (46) vers sa position de verrouillage.

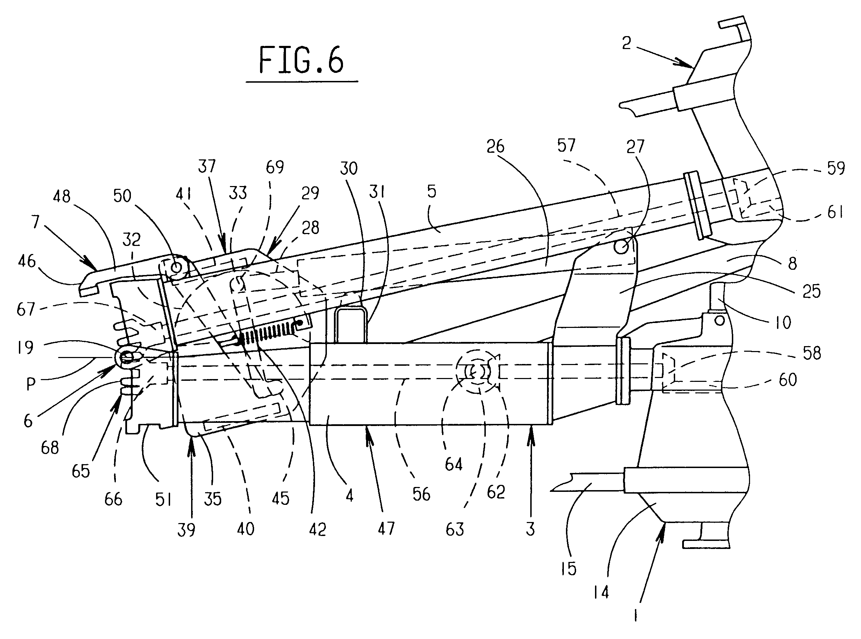

Comme cela ressort notamment des figures 3 et 6, dans chaque partie (4 et 5) du support transversal (3) est logé un arbre d'entraînement (56 et 57) servant à faire tourner la roue râteleuse (1 et 2) correspondante autour de son axe support central (10, 11). A cet effet, chaque arbre (56 et 57) comporte à son extrémité dirigée vers la roue râteleuse (1 et 2) correspondante un pignon (58 et 59) qui engrène avec une couronne dentée (60 et 61) solidaire du boîtier (14) de ladite roue râteleuse (1, 2). L'arbre (56) qui est situé dans la première partie (4) du support (3) est lui-même entraîné au moyen d'un pignon conique (62) qui engrène avec un second pignon (63) solidaire d'un arbre intermédiaire (64). Celui-ci s'étend vers l'avant, hors de la première partie (4) et peut être relié, d'une manière connue en soi, à l'aide d'un arbre à cardans, à un arbre de prise de force du tracteur d'entraînement.

Au niveau de l'articulation (6) entre les deux parties (4 et 5), les arbres d'entraînement (56 et 57) sont reliés entre eux au moyen d'un dispositif d'accouplement à doigts (65). A cet effet, chacun des arbres (56 et 57) comporte une bague (66, 67) avec six doigts (68) placés suivant un cercle concentrique auxdits arbres (56 et 57). Les doigts (68) de la bague (66) solidaire du premier arbre (56) engrènent avec ceux de la bague (67) du second arbre (57) de manière à transmettre le mouvement de rotation. Un engrènement partiel est maintenu lors du déplacement de la partie repliable (5) du support (3) autour de l'axe d'articulation (19) (fig. 6).

Comme cela ressort de la figure 1, au travail, l'andaineur est déplacé dans la direction (A) au moyen du tracteur. Les roulettes (12 et 13) roulent alors sur le sol. Le tourillon (33) se situe dans l'encoche (45) et le verrou (46) bloque les deux parties (4 et 5) l'une par rapport à l'autre. Les deux roues râteleuses (1 et 2) sont disposées suivant une ligne oblique par rapport à la direction d'avancement (A), de sorte que leurs trajectoires se recouvrent partiellement. Elles sont entraînées en rotation autour de leurs axes supports (10 et 11) dans le même sens (F) à partir de l'arbre de prise de force du tracteur. Par suite de cette rotation, les galets situés aux extrémités des bras porte-fourches (15) se déplacent dans la came qui est logée dans le boîtier (14) correspondant. Celle-ci commande alors lesdits bras, de telle sorte que les fourches (16) soient dirigées vers le sol dans la partie avant de leur trajectoire et qu'elles pivotent vers le haut dans la partie latérale dans laquelle elles se déplacent vers l'arrière (vu dans la direction d'avancement (A)). Dans ladite partie avant, les fourches (16) ramassent le fourrage se trouvant sur le sol. Ensuite, elles le déposent sous la forme d'un andain en raison de leur pivotement dans la partie latérale de leur trajectoire. A cause de la disposition des deux roues râteleuses (1 et 2), l'andain formé par la roue râteleuse (1) la plus en avant est repris par l'autre roue râteleuse (2) qui forme un andain latéral de gros volume.

Les deux roues râteleuses (1 et 2) pourraient également être placées suivant une ligne perpendiculaire au sens d'avancement (A). Dans ce cas, chacune pourrait former son propre andain.

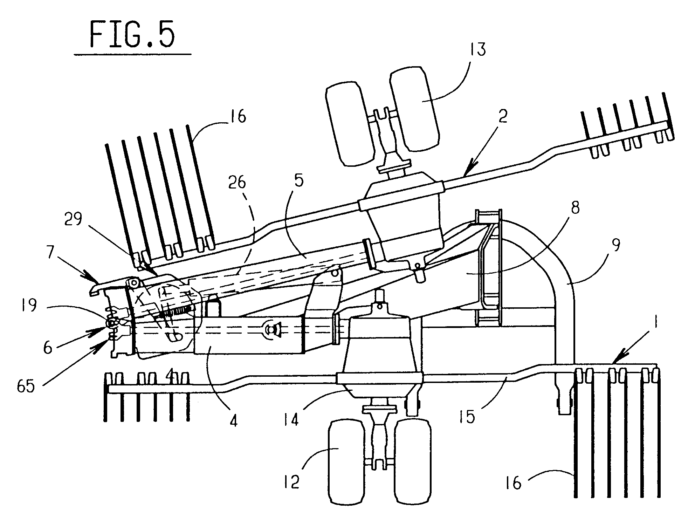

Pour transposer l'andaineur dans la position de transport représentée sur les figures 5 et 6, l'opérateur commande, depuis le tracteur, le raccourcissement du vérin hydraulique (26). Sa tige (28) déplace alors le tourillon (33) et le fait sortir de l'encoche (45). Ce tourillon (33) repousse la patte de manoeuvre (52) qui fait tourner le verrou (46) vers le bas, autour de son axe d'articulation (50). Ledit verrou (46) se détache ainsi de la première partie fixe (4) et libère la partie repliable (5). La tige (28) du vérin hydraulique (26) tire ensuite avec un important bras de levier sur les plaques (34 et 35) solidaires de la partie repliable (5) et fait pivoter cette dernière autour de l'axe d'articulation (19).

Durant ce pivotement, le tourillon (33) est guidé vers l'extrémité opposée (69) de l'orifice (42) par l'arrêt (32). Dans un premier temps, cet arrêt (32) s'appuie contre la butée (40) et fait glisser le tourillon (33) dans l'orifice (42) en raison de sa forme en demi-cercle. Dans un deuxième temps, c'est-à-dire lorsque la partie repliable (5) a passé la position verticale, l'arrêt (32) est en contact avec la seconde butée (41) et empêche le basculement brutal de ladite partie repliable (5). Avant que celle-ci n'arrive dans la position de transport, le corps du vérin (26) rencontre la butée (30). Celle-ci empêche le vérin (26) et le tourillon (33) de descendre davantage vers la première partie (4) du support (3). La partie repliable (5) et les plaques (34 et 35) se déplacent alors par rapport au tourillon (33) jusqu'à ce que celui-ci se situe dans l'extrémité (69) des deux orifices (42). A ce moment, la partie repliable (5) rencontre le bras support (25) du vérin hydraulique (26), l'axe (27) formant un arrêt sur lequel repose ladite partie repliable durant le transport. Dans cette position, les deux roues râteleuses (1 et 2) de la machine sont pratiquement superposées. La largeur de la machine est alors réduite de moitié, ce qui facilite les déplacements sur les chemins et sur les routes.

Pour revenir dans la position de travail, l'opérateur commande le vérin hydraulique (26) de sorte qu'il s'allonge. Le tourillon (33) qui se situe à une importante distance au-dessus du plan (P) passant par l'axe d'articulation (19), pousse alors avec un important bras de levier sur la partie repliable (5) du support (3). Celle-ci pivote autour de l'axe d'articulation (19) et revient progressivement vers la position de travail. Durant ce pivotement, l'arrêt (32) coopère avec les butées (40 et 41) et empêche tout basculement brutal de la partie repliable (5). Le corps du vérin hydraulique (26) revient alors à nouveau en contact avec la butée (30), de sorte que le tourillon (33) demeure à une importante distance au-dessus du plan (P) passant par l'axe d'articulation (19). Lorsque la partie repliable (5) a atteint la position de travail, le vérin (26) pousse le tourillon (33) dans l'encoche (45). Il libère alors la patte de manoeuvre (52) du verrou (46) qui pivotera automatiquement, par suite de la traction du ressort (53), dans la position de verrouillage. L'andaineur se situe alors à nouveau dans la position de travail.

Durant les transpositions précitées, l'arbre d'entraînement (57) qui est logé dans la partie repliable (5) pivote avec cette dernière, sans aucune intervention de la part de l'opérateur.

Il est bien évident que l'invention n'est pas limitée au mode de réalisation décrit et représenté sur les dessins annexés. Des modifications restent possibles, notamment en ce qui concerne la constitution des divers éléments ou par substitution d'équivalents techniques, sans sortir pour autant du domaine de protection tel que défini dans les revendications.

## Revendications

1. Machine de fenaison pour l'andainage de fourrage, ayant deux roues râteleuses (1 et 2) qui sont entraînées en rotation durant le travail autour d'axes (10 et 11) sensiblement verticaux, lesquelles roues râteleuses (1 et 2) sont reliées entre elles au moyen d'un support transversal (3) qui est réalisé en deux parties (4 et 5) articulées entre elles au moyen d'une articulation (6) comportant un seul axe de pivotement (19) sensiblement horizontal, l'une (4) de ces parties (4 et 5) étant fixe et l'autre (5) pouvant être repliée autour de cette articulation (6) jusque au-dessus de la partie fixe (4) et de la roue râteleuse (1) correspondante pour le transport, ***caractérisée par le fait*** qu'un vérin hydraulique (26) est relié par l'une de ses extrémités à la première partie fixe (4) dudit support (3) et par son autre extrémité à la partie repliable (5) en vue d'assurer le déplacement de cette dernière autour de l'axe de pivotement (19), que ce vérin hydraulique (26) est guidé de telle sorte que dans chaque position de ladite partie repliable (5), il se situe au-dessus d'un plan horizontal (P) passant par l'axe géométrique de l'axe de pivotement (19) et qu'elle comporte un dispositif de verrouillage (7) bloquant la partie repliable (5) par rapport à la première partie fixe (4) dans la position de travail.

2. Machine selon la revendication 1, caractérisée par le fait que le vérin hydraulique (26) coopère avec un dispositif de guidage (29) qui le maintient au-dessus du plan horizontal (P) dans chaque position de la partie repliable (5).

3. Machine selon la revendication 1 ou 2, caractérisée par le fait que la première partie (4) du support transversal (3) comporte une butée (30) pour le vérin hydraulique (26).

4. Machine selon la revendication 2, caractérisée par le fait que le dispositif de guidage (29) comporte un arrêt (32) et un tourillon (33) solidaires de la tige (28) du vérin hydraulique (26) ainsi qu'au moins une plaque (34, 35) qui est solidaire de la partie repliable (5), laquelle plaque (34, 35) comporte deux butées (40, 41) situées de part et d'autre de l'arrêt (32) et un orifice (42) de forme allongée dans lequel est logé le tourillon (33).

5. Machine selon la revendication 4, caractérisée par le fait que l'arrêt (32) présente sensiblement la forme d'une moitié de cercle dont le diamètre est égal à la distance (D) entre les deux butées (40 et 41).

6. Machine selon la revendication 5, caractérisée par le fait que le tourillon (33) se situe près du bord de l'arrêt (32).

7. Machine selon la revendication 4, caractérisée par le fait que l'orifice (42) est sensiblement vertical lorsque la partie repliable (5) est dépliée.

8. Machine selon la revendication 7, caractérisée par le fait que l'orifice (42) comporte près de son extrémité (44) qui est dirigée vers le haut lorsque la partie repliable (5) est dépliée, une encoche latérale (45) qui est orientée vers la roue râteleuse (2) de cette partie repliable (5).

9. Machine selon la revendication 1, caractérisée par le fait qu'elle comporte un dispositif de verrouillage (7) liant les deux parties (4 et 5) entre elles dans la position de travail.

10. Machine selon la revendication 9, caractérisée par le fait qu'elle comporte un verrou (46) qui se situe sur le côté des parties (4 et 5) qui est dirigé vers le bas.

11. Machine selon la revendication 10, caractérisée par le fait que le verrou (46) est articulé sur la partie repliable (5) et qu'il est lié à un ressort (53) qui le sollicite normalement vers sa position de verrouillage.

12. Machine selon la revendication 10 ou 11, caractérisée par le fait que le verrou (46) comporte une patte de manoeuvre (52) actionnée par le tourillon (33).

13. Machine selon l'une quelconque des revendications précédentes, caractérisée par le fait que dans chaque partie (4 et 5) est logé un arbre d'entraînement (56 et 57) de la roue râteleuse (1, 2) correspondante et que ces deux arbres (56 et 57) sont reliés entre eux au moyen d'un dispositif d'accouplement à doigts (65) situé au niveau de l'articulation (6).

## Claims

1. Haymaking machine for windrowing forage, having two raking wheels (1 and 2) which are driven in rotation during work about substantially vertical axes (10 and 11), which raking wheels (1 and 2) are connected together by means of a transverse support (3) which is made in two parts (4 and 5) articulated together by means of an articulation (6) including a single substantially horizontal pivot axis (19), one (4) of these parts (4 and 5) being stationary and the other (5) being able to be folded about this articulation (6) right on top of the stationary part (4) and the corresponding raking wheel (1) for transport, ***characterized in*** that a hydraulic jack (26) is connected by one of its ends to the first stationary part (4) of the said support (3) and by its other end to the folding part (5) so as to cause the displacement of the latter about the pivot axis (19), in that this hydraulic jack (26) is guided in such a way that in each position of the said folding part (5) it lies above a horizontal plane (P) passing through the geometric axis of the pivot axis (19) and in that it includes a locking device (7) blocking the folding part (5) with respect to the first stationary part (4) in the work position.

2. Machine according to Claim 1, ***characterized in*** that the hydraulic jack (26) cooperates with a guide device (29) which keeps it above the horizontal plane (P) in each position of the folding part (5).

3. Machine according to Claim 1 or 2, ***characterized in*** that the first part (4) of the transverse support (3) includes a buffer (30) for the hydraulic jack (26).

4. Machine according to Claim 2, ***characterized in*** that the guide device (29) includes a stop (32) and a journal (33) which are integral with the rod (28) of the hydraulic jack (26) as well as at least one plate (34, 35) which is integral with the folding part (5), which plate (34, 35) includes two buffers (40, 41) situated on either side of the stop (32) and an orifice (42) of elongate shape in which the journal (33) is housed.

5. Machine according to Claim 4, ***characterized in*** that the stop (32) is substantially in the shape of half of a circle, the diameter of which is equal to the distance (D) between the two buffers (40 and 41).

6. Machine according to Claim 5, ***characterized in*** that the journal (33) is situated close to the edge of the stop (32).

7. Machine according to Claim 4, ***characterized in*** that the orifice (42) is substantially vertical when the folding part (5) is unfolded.

8. Machine according to Claim 7, ***characterized in*** that the orifice (42), close to its end (44) which points upwards when the folding part (5) is unfolded, includes a lateral cutout (45) which points towards the raking wheel (2) of this folding part (5).

9. Machine according to Claim 1, ***characterized in*** that it includes a locking device (7) linking the two parts (4 and 5) together in the work position.

10. Machine according to Claim 9, ***characterized in*** that it includes a bolt (46) which is situated on the side of the parts (4 and 5) which points downwards.

11. Machine according to Claim 10, ***characterized in*** that the bolt (46) is articulated to the folding part (5) and that it is connected to a spring (53) which normally urges it into its locked position.

12. Machine according to Claim 10 or 11, ***characterized in*** that the bolt (46) includes an operating catch (52) activated by the journal (33).

13. Machine according to any one of the preceding claims, ***characterized in*** that in each part (4 and 5) is housed a driveshaft (56 and 57) for the corresponding raking wheel (1, 2) and in that these two shafts (56 and 57) are connected together by means of a finger coupling device (65) situated at the articulation (6).

## Patentansprüche

1. Heuwerbungsmaschine zum Schwaden von Halmgut mit zwei Rechrädern (1 und 2), die im Betrieb um im wesentlichen vertikale Achsen (10 und 11) drehangetrieben werden wobei die Rechräder (1 und 2) mittels einer Querstütze (3) miteinander verbunden sind die in zwei mittels eines Gelenks (6), das eine einzige im wesentlichen horizontale Schwenkachse (19) aufweist, aneinander angelenkten Teilen (4 und 5) ausgebildet ist, wobei einer (4) dieser Teile (4 und 5) feststehend ist und der andere (5) für den Transport um dieses Gelenk (6) bis über den feststehenden Teil (4) und das entsprechende Rechrad (1) geklappt werden kann, ***dadurch gekennzeichnet**,* daß ein Hydraulikzylinder (26) mit einem seiner Enden mit dem ersten feststehenden Teil (4) der Stütze (3) und mit seinem anderen Ende mit dem klappbaren Teil (5) verbunden ist, damit die Bewegung des letzteren um die Schwenkachse (19) gewährleistet wird daß dieser Hydraulikzylinder (26) so geführt wird daß er sich in jeder Position des klappbaren Teils (5) über einer die geometrische Achse der Schwenkachse (19) durchquerenden horizontalen Ebene (P) befindet und daß die Maschine eine Verriegelungsvorrichtung (7) enthält die in der Arbeitsposition den klappbaren Teil (5) bezüglich des ersten feststehenden Teils (4) sperrt.

2. Maschine nach Anspruch 1, ***dadurch gekennzeichnet**,* daß der Hydraulikzylinder (26) mit einer Führungsvorrichtung (29) zusammenwirkt, die ihn in jeder Position des klappbaren Teils (5) über der horizontalen Ebene (P) hält.

3. Maschine nach Anspruch 1 oder 2, ***dadurch gekennzeichnet**,* daß der erste Teil (4) der Querstütze (3) einen Anschlag (30) für den Hydraulikzylinder (26) enthält.

4. Maschine nach Anspruch 2, ***dadurch gekennzeichnet**,* daß die Führungsvorrichtung (29) ein Halteglied (32) und einen Zapfen (33), die fest mit der Stange (28) des Hydraulikzylinders (26) verbunden sind, sowie mindestens eine Platte (34, 35), die fest mit dem klappbaren Teil (5) verbunden ist, aufweist, wobei die Platte (34, 35) zwei Anschläge (40, 41), die sich auf beiden Seiten des Halteglieds (32) befinden, und eine längliche Öffnung (42), in der sich der Zapfen (33) befindet, aufweist.

5. Maschine nach Anspruch 4, ***dadurch gekennzeichnet**,* daß das Halteglied (32) im wesentlichen die Form eines Halbkreises aufweist, dessen Durchmesser gleich dem Abstand (D) zwischen den beiden Anschlägen (40 und 41) ist.

6. Maschine nach Anspruch 5, ***dadurch gekennzeichnet**,* daß sich der Zapfen (33) nahe der Kante des Halteglieds (32) befindet.

7. Maschine nach Anspruch 4, ***dadurch gekennzeichnet**,* daß die Öffnung (42) im wesentlichen vertikal ist, wenn der klappbare Teil (5) nach außen geklappt ist.

8. Maschine nach Anspruch 7, ***dadurch gekennzeichnet**,* daß die Öffnung (42) nahe seinem Ende (44), das nach oben gerichtet ist wenn der klappbare Teil (5) nach außen geklappt ist, eine seitliche Kerbe (45) aufweist, die zu dem Rechrad (2) dieses klappbaren Teils (5) gerichtet ist.

9. Maschine nach Anspruch 1, ***dadurch gekennzeichnet**,* daß sie eine Verriegelungsvorrichtung (7) aufweist, die die beiden Teile (4 und 5) in der Arbeitsposition miteinander verbindet.

10. Maschine nach Anspruch 9, ***dadurch gekennzeichnet**,* daß sie einen Riegel (46) aufweist, der sich auf der Seite der Teile (4 und 5) befindet, die nach unten gerichtet ist.

11. Maschine nach Anspruch 10, ***dadurch gekennzeichnet**,* daß der Riegel (46) an dem klappbaren Teil (5) angelenkt und mit einer Feder (53) verbunden ist, die ihn normalerweise in seine Verriegelungsposition vorspannt.

12. Maschine nach Anspruch 10 oder 11, ***dadurch gekennzeichnet**,* daß der Riegel (46) einen durch den Zapfen (33) betätigten Bedienungsschenkel (52) aufweist.

13. Maschine nach einem der vorhergehenden Ansprüche, ***dadurch gekennzeichnet**,* daß in jedem Teil (4 und 5) eine Antriebswelle (56 und 57) des entsprechenden Rechrades (1, 2) untergebracht ist und daß diese beiden Wellen (56 und 57) mittels einer sich in Höhe des Gelenks (6) befindenden Fingerklauenkupplung (65) miteinander verbunden sind.
